Europäisches Patentamt

European Patent Office

Office européen des brevets

(19)

(11) Publication number: **0 058 653**
A1

# (12) EUROPEAN PATENT APPLICATION

(21) Application number: **82850022.3**

(22) Date of filing: **11.02.82**

(51) Int. Cl.³: **B 65 G 53/52**
**F 16 L 57/00**

(30) Priority: **12.02.81 SE 8100988**

(43) Date of publication of application:
**25.08.82 Bulletin 82/34**

(84) Designated Contracting States:
**BE DE FR GB NL**

(71) Applicant: **GULLFIBER AB**
**Fack**
**S-260 50 Billesholm(SE)**

(72) Inventor: **Andersson, Ralf**
**Frostgatan 88**
**S-260 35 Odäkra(SE)**

(72) Inventor: **Svensson, Bengt**
**Lantvärnsgatan 1B**
**S-252 57 Helsingborg(SE)**

(72) Inventor: **Thomsen, Arne**
**Villagatan 1**
**S-265 00 Astorp(SE)**

(74) Representative: **Bernhult, Lennart et al,**
**W Geralf Patentbyra AB Kungsgatan 33**
**S-111 56 Stockholm(SE)**

(54) A tube and a tube system intended for pneumatic transport.

(57) A tube (10) for pneumatic transport of wearing material, for example crushed glass, sand, dolomite or basalt, consists of an outer casing (12) at the inside being covered with a wearing layer (14). Said wearing layer comprises a cast composition including crush glass and binder, preferably in the form of epoxy resin, in which composition there is moulded one or more electrical lines (16). Said electrical lines are connectable in a corresponding signal line having indicating means intended to enable indication of breaks of electrical lines at predetermined tube wearing. Also is disclosed a tube system comprising several tubes of the kind indicated above enabling indication and identification of breaks of electrical lines in a corresponding tube.

FIG. 1

EP 0 058 653 A1

A tube and a tube system intended for pneumatic transport

This invention refers to a tube intended for pneumatic transport of wearing material, e.g. crushed glass, sand, dolomite or basalt, said tube consisting of an outer casing which is covered at the inside thereof by a wearing layer. Furthermore the invention relates to a complete tube system including several of said tubes.

The use of tubes and tube systems for pneumatic transport has many advantages for example from the point of view of working environment and brings about proportionately simple tubings both in vertical and horizontal planes. The essential drawbacks of this type of transport include a large consumption of energy and a heavy wearing of the tubes and the tube systems, respectively, particularly in connection with bends and shunt lines.

In conventional arrangements of the intended kind the radius of the tube bends is selected as large as possible in order not to make the drops of pressure too large. In this connection a high speed of transportation is obtained through the corresponding tube bend but simultaneously also an even and heavy wearing thereof. Conventionally the tube arrangement includes an outer casing which may be covered at the inside by a wearing layer, for example consisting of basalt, porcelain etc, in order to increase the resistibility of wearing.

The main object of the invention is to further increase the resistibility of wearing of the tube material and at the same time making it possible to appoint suitable point of time for change of weared tubes or tube sections. According to the invention this is made possible by a wearing layer consisting of a cast compound including crush glass and binder, preferably in the form of epoxy resin, in which compound one or more electrical lines are moulded said electrical lines being connectable to a corresponding signal line including indicating means to indicate breaks of electrical lines at a predetermined wearing of tubes. The electrical line or lines essentially extend in the longitudinal direction of the tube and are suitably moulded in the wearing composition closer to the outside thereof than to the inside. The proportion of volume between crush glass and binder should amount approximately 2:1 and the fractional size with respect to the crush glass of the wearing composition should preferably amount 2 - 10 mm. In a larger tube system for pneumatic transport there are suitably included several tubes the electrical lines in all tubes being connected to a common indicating means including indicators in the form of light diodes or the like corresponding to the separate tubes to indicate and identify breaks of electrical lines in corresponding tube or tubes.

By use of a structure according to the principles of the invention it will be possible to eliminate the large radius of tube bend which was necessary earlier. Hereby a more concentrated wearing of the tube bend is obtained at a certain limited place where the exchangeable wearing material is located and can exist at a wanted thickness.

A tube system designed according to the principles of the invention has proved to have a working life being three to four times longer than the life of conventional tube systems including wearing material of a ceramic and other cast metals.

By the new tube structure it will be possible at breaks in electrical lines to obtain a light or sound signal indicating that the corresponding tube or tube section will soon be completely weared out. By being timely reminded of this circumstance it will also be possible to reduce the costs for cleaning, environmental influence and other damages that may occur in connection with leakage of tubes. Simultaneously a high degree of reliability of the transport system is obtained and also the possibility of planned maintainance stops.

The invention will be described more in detail below in the form of a preferred example by reference to the enclosed drawings.

Fig. 1 discloses in perspective part of a tube built up according to the principles of the invention, the outer casing of said tube being partly deleted at the tube end.

Fig. 2 discloses in a plane view from the side a tube system including tubes of the type disclosed in Fig. 1 and utilizing an indicating means common to all tubes, said means permitting an immediate identification of weared tubes in the tube system.

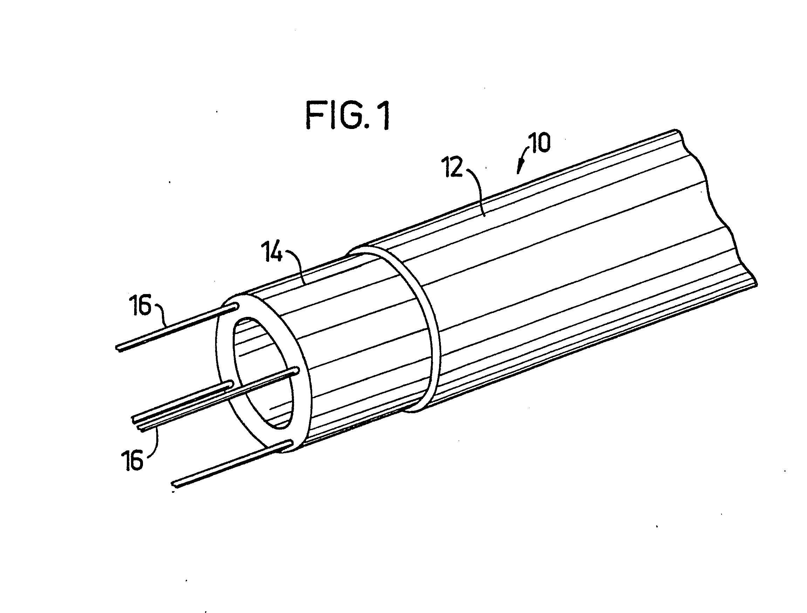

The tube 10 schematically disclosed in Fig. 1 includes an outer casing 12 which may be manufactured of metal or plastic, for example, and an inside wearing layer 14, which in this case completely covers the inside of the tube. Said wearing layer includes a cast composition comprising crushed glass and liquid epoxy resin and has been prepared in a mould, four electrical lines 16 being located inside the outer casing 12. The fractional size in respect to the crush glass preferably is within 2 - 10 mm. In the disclosed embodiment the four electrical lines 16 moulded in the cast composition extend in the longitudinal direction of the tube 10. The electrical lines are located closer to the outside of the wearing layer 14 than to the inside thereof. They project at both tube ends and should be so designed that they can be easily connected in a signal circuit (not disclosed in Fig. 1) for the intended subject, said signal circuit making it possible to observe - via a flashing lamp or the like - when the wearing of the wearing layer has advanced so far that a break has resulted in one of the electrical lines 16 moulded therein.

Of course the total number of utilized electrical lines and the extension thereof are not critical. Thus, it is also possible to use a single electrical line, e.g. extending helically along the length of the tube, for each tube.

The wearing layer 14 may either be fixed to the outer casing 12 or loosable in respect thereto. In the first case the total tube 10 has to be replaced after the receipt of the alarm signal. In the latter case only the wearing layer is replaced.

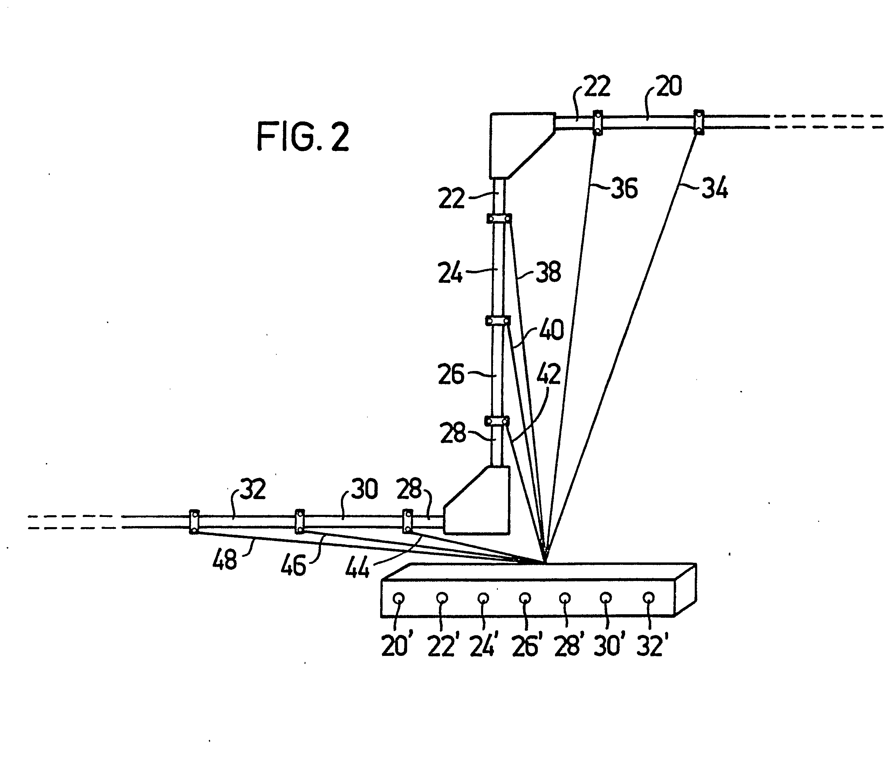

Fig. 2 discloses a tube system having indicating means 18 directly indicating that one of the tube sections 20, 22, 24, 26, 28, 30, 32 which should be replaced or completed. In the case of interest the tube system includes tube sections which all comprise wearing layers and electrical lines moulded therein. However, in practice it is often necessary only to apply electrical lines to certain of the tube sections 20, 22, 24, 26, 28, 30, 32, and particularly this applies to tube bends in which the wearing is extra hard. The electrical lines in all tube sections having such lines are connected to the common indicating means via corresponding electric conductors, said indicating means including a total number of (seven) light diodes 20', 22', 24', 26', 28', 30', 32' corresponding to the number of tube sections having electrical lines. Thus, such an arrangement makes it possible to directly identify a weared out tube section.

The tube sections included in the tube system are connected to each other at the ends by conventional couplings designed for this end and containing bushings for the electrical lines.

5

0058653

CLAIMS

1. A tube (10) for pneumatic transport of wearing material, for example crushed glass, sand, dolomite or basalt, said tube consisting of an outer casing (12) which at the inside is covered with a wearing layer (14), c h a r a c - t e r i z e d in that the wearing layer (14) includes a cast composition comprising crush glass and binder, in which composition one or more electrical lines (16) are moulded said lines being connectable to a corresponding signal line having indicating means to enable indication of breaks of electrical lines at a predetermined tube wearing.

2. A tube according to claim 1, c h a r a c t e r - i z e d in that said electrical line or lines (16) extend essentially in the longitudinal direction of the tube (10).

3. A tube according to claim 1 or 2, c h a r a c - t e r i z e d in that said electrical line or lines (16) are moulded in the wearing layer (14) closer to the outside thereof and to the inside.

4. A tube according to any of claims 1 - 3, c h a r a c- t e r i z e d in that the fractional size in respect to the crush glass of the wearing layer (14) preferably amounts 2 - 10 mm.

5. A tube according to any of claims 1 - 4, c h a r a c - t e r i z e d in that the proportion of volume between the crush glass of the wearing layer (14) and the binder is approximately 2:1.

6. A tube system intended for pneumatic transport of wearing material, for example crushed glass, sand, dolomite or basalt, in which system is included several tubes (20, 22, 24, 26, 28, 30, 32) according to any of claims 1 - 5, c h a - r a c t e r i z e d in that the electrical lines of all tubes are connected to a common indicating means (18) including indicators (20', 22', 24', 26', 28', 30', 32') corresponding to the separate tubes and having the form of light diodes or the like for indicating and identifying breaks of electrcial line or lines in corresponding tube or tubes.

# FIG.1

FIG. 2

## EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| Y,A | DE - B2 - 2 428 725 (RUHRKOHLE AG.) | | B 65 G 53/52, |
| | * column 3, line 40 to column 4, line 7 * | 1 | F 16 L 57/00 |
| | * column 4, lines 53 to 59 * | 6 | |
| | -- | | |
| Y,A | DE - A1 - 2 646 569 (DR. KÜTTNER KG.) | | |
| | * page 5, line 22 to page 7, line 11 * | 1 | |
| | * page 8, lines 3 to 11 * | 6 | |
| | -- | | **TECHNICAL FIELDS SEARCHED (Int.Cl. 3)** |
| Y | DE - U - 7 438 514 (BECKSCHULTE et al.) | | |
| | * pages 1, 2 * | 1 | |
| | -- | | |
| Y | DE - C - 897 235 (LÜNER BAU- UND INDUSTRIEBEDARF-FABRIK F. SCHULTZ & CO.) | | B 65 D 90/00 |
| | | | B 65 G 53/00 |
| | | | F 16 L 43/00 |
| | * claims 1, 3 * | 1 | F 16 L 57/00 |
| | -- | | F 17 D 5/00 |
| Y | US - A - 3 649 959 (SAKATA et al.) | | |
| | * abstract * | 1 | |
| | -- | | |
| Y | DE - A - 1 808 124 (WARTMANN AG NIEDERMATTE) | | |
| | * page 4, lines 1 to 20 * | 1 | |
| | -- | | |
| A | DE - A1 - 2 808 605 (DR. W. MÄDER AG LACK- UND FARBENFABRIK et al.) | | |
| | * claim 9 * | 1 | |
| | -- | | |
| | ./.. | | |

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| Place of search | Date of completion of the search | Examiner | |
| Berlin | 06-05-1982 | SIMON | |

EPO Form 1503.1  06.78

**European Patent Office**

**EUROPEAN SEARCH REPORT**

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| A | US - A - 4 169 906 (HALLSTROM et al.) -- | | |
| A | DE - U - 1 722 682 (DYNAMIT ACTIEN-GESELLSCHAFT) ---- | | |
| | | | TECHNICAL FIELDS SEARCHED (Int. Cl.3) |

EPO Form 1503.2 06.78